# EUROPEAN PATENT APPLICATION

(11) **EP 3 101 506 A1**
(43) Date of publication of application: **07.12.2016**
(21) Application number: 14879756.6
(22) Date of filing: 27.01.2014
(51) Int. Cl.: G05D 7/06, F15B 11/00, E02F 9/20

(54) **DEVICE FOR CONTROLLING REGENERATED FLOW RATE FOR CONSTRUCTION MACHINE AND METHOD FOR CONTROLLING SAME**

(71) Applicant: Volvo Construction Equipment AB, 631 85 Eskilstuna (SE)
(72) Inventor: JUNG, Tae-Rang, Busan 616-797 (KR); LEE, Chun-Han, Gimhae-si Gyeongsangnam-do 621-785 (KR)
(74) Representative: Gulde & Partner
(86) International application number: PCT/KR2014/000741
(87) International publication number: WO 2015/111775

(57) **Abstract**

Disclosed are a device for controlling a regenerated flow rate for a construction machine and a method for controlling the same, the device being able to supply a large chamber of an arm cylinder with a part of operating oil, which is discharged from the arm cylinder to an operating oil tank during arm-in driving, and regenerating the same. The present invention provides a device for controlling a regenerated flow rate for a construction machine, the device being characterized by comprising: a variable capacity-type hydraulic pump and a pilot pump; an arm cylinder driven by operating oil supplied from the hydraulic pump; a variable arm regeneration valve installed in a passage between the arm cylinder and the operating oil tank; and an electronic proportional valve installed in a passage between the pilot pump and the arm regeneration valve.

## Description

### TECHNICAL FIELD

The present disclosure generally relates to a device for controlling a regeneration flow rate in a construction machine and a control method thereof. More particularly, the present disclosure relates to a device for controlling a regeneration flow rate in a construction machine to regenerate a portion of working fluid discharged from an arm cylinder to a working fluid tank during an arm-in operation by supplying the portion of the working fluid to a larger chamber of the arm cylinder and a control method thereof.

### BACKGROUND ART

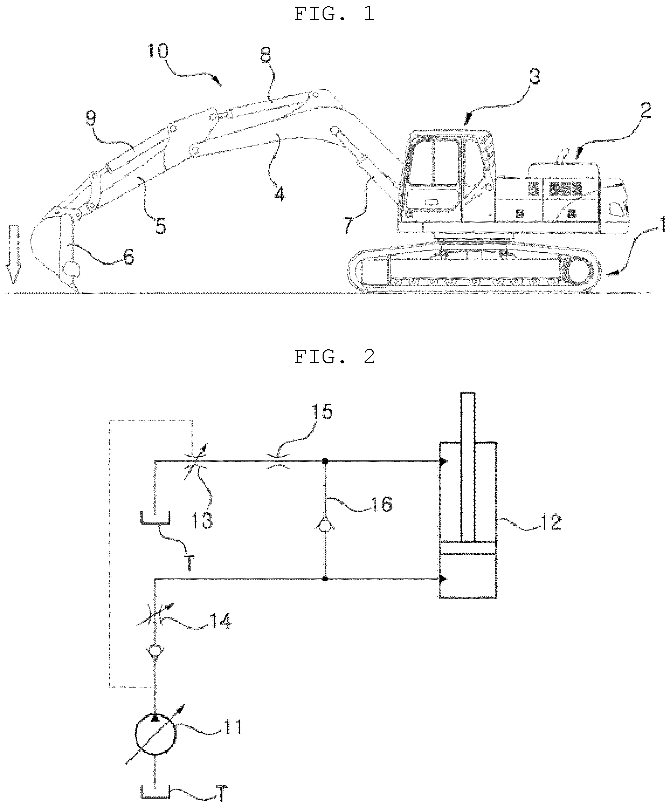

A typical excavator, as illustrated in FIG. 1, includes a lower driving body 1, an upper frame 2, a cab 3, an engine compartment, and an actuator 10.

The upper frame 2 is rotatably disposed on the lower driving body 1.

The cab 3 and the engine compartment are disposed on the upper frame 2.

The actuator 10 includes a boom 4, an arm 5, and a bucket 7 to be driven by a boom cylinder 7, an arm cylinder 8 and a bucket cylinder 9 respectively.

During an arm-in operation in which the arm cylinder 8 is actuated to extend so that the center of mass of the bucket 6 is positioned in a vertical line, as illustrated in FIG. 1, an working fluid discharged from a smaller chamber of the arm cylinder 8 drains into a working fluid chamber in an amount corresponding to a change in the potential energy of the actuator 10. Here, a portion of the working fluid discharged from the arm cylinder 8 is regenerated by being supplied to a larger chamber of the arm cylinder.

A device for controlling a regeneration flow rate in a construction machine according to the prior art, as illustrated in FIG. 2, includes a variable capacity hydraulic pump (hereinafter referred to as a hydraulic pump) 11, an arm cylinder 12, and an arm regeneration valve 13.

The arm cylinder 12 is actuated by working fluid supplied by the hydraulic pump 11.

The arm regeneration valve 13 is disposed on a passage between the smaller chamber of the arm cylinder 12 and a working fluid tank T. During an arm-in operation, the arm regeneration valve 13 allows a portion of working fluid discharged from the smaller chamber of the arm cylinder 12 to be supplied to a larger chamber of the arm cylinder 12 through a regeneration passage 16 or to be drained into the working fluid tank T therethrough.

In the device for controlling a regeneration flow rate according to the prior art, during an arm-in operation, working fluid discharged from the hydraulic pump 11 is supplied to the larger chamber of the arm cylinder through a main control valve (MCV) 14 to actuate the arm cylinder 12 to extend. Then, a first portion of working fluid discharged from the smaller chamber of the arm cylinder 12 is supplied to the larger chamber of the arm cylinder 12 through the regeneration passage 16. A second portion of the working fluid discharged from the smaller chamber of the arm cylinder 12 drains into the working fluid tank T through a fixed orifice 15 and the arm regeneration valve 13.

As described above, during an arm-in operation, the fixed orifice 15 allows only a small amount of working fluid discharged from the smaller chamber of the arm cylinder 12 to be regenerated to the larger chamber of the arm cylinder 12, and cuases pressure lose. Consequently, energy efficiency is reduced, which is problematic.

In addition, working fluid may be supplied to the larger chamber of the arm cylinder 12 by the hydraulic pump 11 through the MCV 14. Then, during a grading operation, working fluid in the smaller chamber of the arm cylinder 12 returns to the larger chamber of the arm cylinder 12 and the working fluid tank T. Consequently, during the grading operation, the back pressure of the arm cylinder 12 cannot be freely set because of the fixed orifice 15.

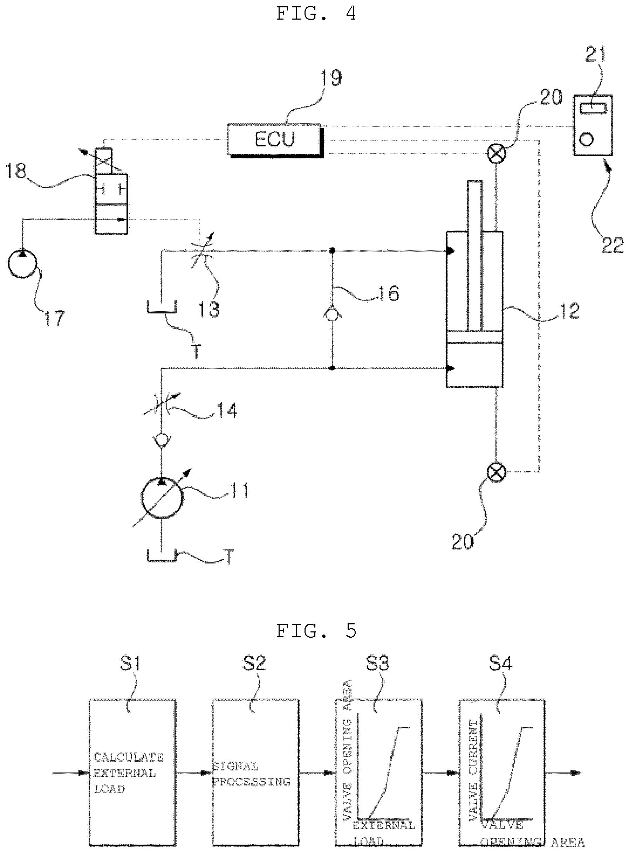

FIG. 5 illustrates a control method of a device for controlling a regeneration flow rate in a construction machine according to the prior art. The device includes an arm cylinder actuated by working fluid supplied by a variable capacity hydraulic pump, a pressure sensor measuring the pressure of the arm cylinder, a variable arm regeneration valve disposed on a passage between the arm cylinder and a working fluid tank, an electronic proportional valve disposed between a pilot pump and the arm regeneration valve, and a controller (ECU) applying electrical signals to the electronic proportional valve. The control method includes:
Step S1 of calculating a pressure value of the arm cylinder measured by the pressure sensor;
Step S2 of linearizing the calculated pressure value of the arm cylinder through signal processing;
Step S3 of calculating an opening area value of the electronic proportional valve corresponding to the signal-processed pressure value of the arm cylinder; and
Step S4 of converting the calculated opening area value of the electronic proportional valve into a corresponding electrical signal and applying the converted electrical signal to the electronic proportional valve.

In the control method of the device for controlling the regeneration flow rate in the construction machine according to the prior art, the opening area value of the electronic proportional valve calculated to correspond to the pressure value in the arm cylinder is limited to only being used during an arm-in operation. Thus, the opening area value of the electronic proportional valve calculated to correspond to an arm-in operation cannot actively cope with a variety of operations, such as combined operations of the actuator or changes in the rotational speed of the engine, which is problematic.

### DISCLOSURE

### Technical Problem

Accordingly, the present disclosure has been made in consideration of the above problems occurring in the related art, and the present disclosure proposes a device for controlling a regeneration flow rate in a construction machine and a control method thereof, which allows for increasing the regeneration flow rate of fluid supplied from a smaller chamber to a larger chamber of an arm cylinder and reducing pressure loss during an arm-in operation, thereby improving energy efficiency.

Also provided are a device for controlling a regeneration flow rate in a construction machine and a control method thereof, which allow a grading operation to be reliably performed by selectively increasing the back pressure of an arm cylinder when a grading mode is selected.

Also provided are a device for controlling a regeneration flow rate in a construction machine and a control method thereof, which allow for obtaining a regeneration flow rate corresponding to a variety of operation modes of an actuator selected by control levers for the actuator, thereby improving operability and responsiveness.

Also provided are a device for controlling a regeneration flow rate in a construction machine and a control method thereof, which allow for actively controlling a regeneration flow rate to correspond to a change in a rotational speed of an engine which may be caused by a combined operation of an actuator, an external load, or a change of an operation mode.

### Technical Solution

According to an aspect of the present disclosure, a device for controlling a regeneration flow rate in a construction machine may include a variable capacity hydraulic pump, a pilot pump, an arm cylinder, a variable arm regeneration valve, and an electronic proportional valve.

The arm cylinder is actuated by working fluid supplied by the hydraulic pump.

The variable arm regeneration valve is disposed on a passage between the arm cylinder and a working fluid tank.

The electronic proportional valve is disposed on a passage between the pilot pump and the arm regeneration valve.

According to another aspect of the present disclosure, provided is a control method of a device for controlling a regeneration flow rate in a construction machine, wherein the device includes a variable capacity hydraulic pump, a pilot pump, an arm cylinder actuated by working fluid supplied by the hydraulic pump, a variable arm regeneration valve disposed on a passage between the arm cylinder and a working fluid tank, an electronic proportional valve disposed on a passage between the pilot pump and the arm regeneration valve, pressure sensors measuring levels of pressure in a larger chamber and a smaller chamber of the arm cylinder, and a controller applying electrical signals corresponding to the levels of pressure measured by the pressure sensors to the electronic proportional valve to control an opening area of the arm regeneration valve. The control method may include:

calculating pressure values from the levels of pressure measured by the pressure sensors;

linearizing the calculated pressure values through signal processing;

determining an operation mode of an actuator based on a control signal input by a control lever for the actuator;

selecting a preset opening area value of the electronic proportional valve corresponding to the determined operation mode of the actuator;

calculating a final opening area value by multiplying the selected opening area value of the electronic proportional valve by a compensation value depending on the rotational speed of an engine; and

converting the calculated final opening area value of the electronic proportional valve to a corresponding electrical signal and applying the converted electrical signal to the electronic proportional valve.

The device for controlling a regeneration flow rate in a construction machine may further include pressure sensors and a controller.

The pressure sensors measure levels of pressure in a larger chamber and a smaller chamber of the arm cylinder.

The controller calculates electrical signals corresponding to the levels of pressure measured by the pressure sensors and applying the calculated electrical signals to the electronic proportional valve.

According to a further aspect of the present disclosure, a device for controlling a regeneration flow rate in a construction machine may include a variable capacity hydraulic pump, a pilot pump, an arm cylinder, a variable arm regeneration valve, an electronic proportional valve, a control switch, and a controller.

The arm cylinder is actuated by working fluid supplied by the hydraulic pump.

The variable arm regeneration valve is disposed on a passage between the arm cylinder and a working fluid tank.

The electronic proportional valve is disposed on a passage between the pilot pump and the arm regeneration valve.

The control switch selects a grading mode.

When a grading mode selection signal is input by the control switch, the controller calculates an electrical signal corresponding to a level of pressure in a smaller chamber of the arm cylinder and applies the calculated electrical signal to the electronic proportional valve, such that the pressure of the smaller chamber of the arm cylinder increases to a set value.

The device may further include a monitor provided with the control switch.

The control switch may further include a control lever for the arm cylinder provided with the control switch.

The electronic proportional valve of which an opening area may be adjusted by the electrical signal applied by the controller may be controlled:

to have a preset first opening area, when the control lever for the actuator is manipulated such that the actuator is in an arm-in operation mode;

to have a preset second opening area, when the control lever for the actuator is manipulated such that the actuator is in an arm-in and bucket-in operation mode; and

to have a preset third opening area, when the control lever for the actuator is manipulated such that the actuator is in an arm-in and boom-up operation mode.

The compensation value may be obtained by:

calculating a first flow rate used during the arm-in operation mode of the arm cylinder;

calculating a second flow rate by multiplying the calculated first flow rate by a percentage of the current rotational speed of the engine with respect to a maximum rotational speed of the engine; and

determining a percentage of the second flow rate with respect to a maximum flow rate as the compensation value.

### Advantageous Effects

According to the present disclosure as set forth above, it is possible to increase a regeneration flow rate of fluid supplied from a smaller chamber to a larger chamber of an arm cylinder and reduce pressure loss during an arm-in operation, thereby improving energy efficiency.

In addition, it is possible to reliably perform a grading operation by selectively increasing the back pressure of an arm cylinder when a grading mode is selected.

Furthermore, it is possible to obtain a regeneration flow rate corresponding to a variety of operating states of an actuator selected by control levers for an actuator, thereby improving workability, operability, and responsiveness.

In addition, it is possible to actively control a regeneration flow rate to correspond to a change in a rotational speed of an engine which may be caused by a combined operation of an actuator, an external load, or a change of an operation mode, thereby improving the operability and responsiveness of the actuator.

### DESCRIPTION OF DRAWINGS

FIG. 1 schematically illustrates a typical excavator;
FIG. 2 is a hydraulic circuit diagram of a device for controlling a regeneration flow rate in a construction machine according to the prior art;
FIG. 3 is a hydraulic circuit diagram of a device for controlling a regeneration flow rate in a construction machine according to an exemplary embodiment;
FIG. 4 is a hydraulic circuit diagram of a device for controlling a regeneration flow rate in a construction machine according to another exemplary embodiment;
FIG. 5 is a flowchart illustrating a control method of a device for controlling a regeneration flow rate in a construction machine according to the prior art;
FIG. 6 is a flowchart illustrating a control method of a device for controlling a regeneration flow rate in a construction machine according to an exemplary embodiment;
FIG. 7 is a flowchart illustrating a process of selecting a preset opening area of an electronic proportional valve by manipulation of a control lever in the control method of the device for controlling a regeneration flow rate in the construction machine according to the exemplary embodiment; and
FIG. 8 is a flowchart illustrating a process of compensating a flow rate of fluid based on a rotational speed of an engine during an arm-in operation in the control method of the device for controlling a regeneration flow rate in the construction machine according to the exemplary embodiment.

### Description of Reference Numerals of Drawings

- 11:: variable capacity hydraulic pump
- 12:: arm cylinder
- 13:: arm regeneration valve
- 14:: main control valve (MCV)
- 16:: regeneration passage
- 17:: pilot pump
- 18:: electronic proportional valve
- 19:: controller
- 20:: pressure sensor

### BEST MODE

Hereinafter, reference will be made in detail to a device for controlling a regeneration flow rate in a construction machine and a control method thereof according to exemplary embodiments in conjunction with the accompanying drawings.

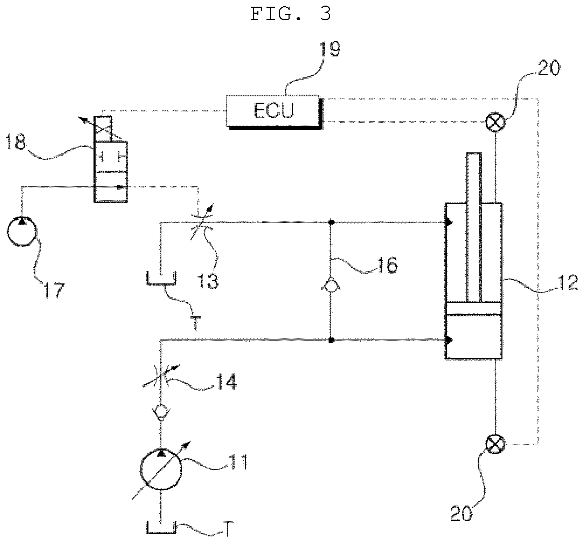

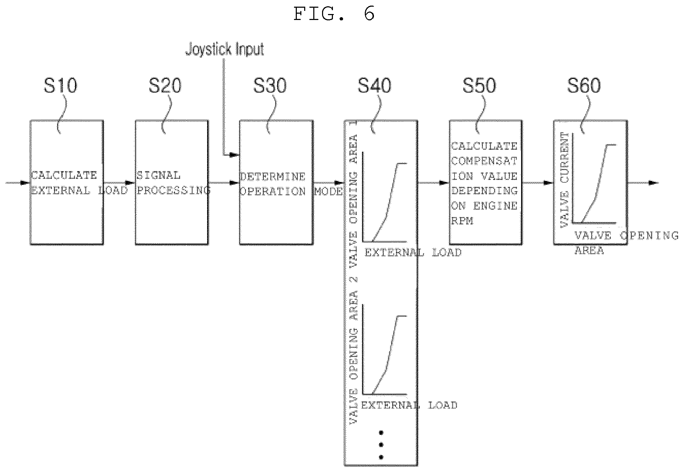

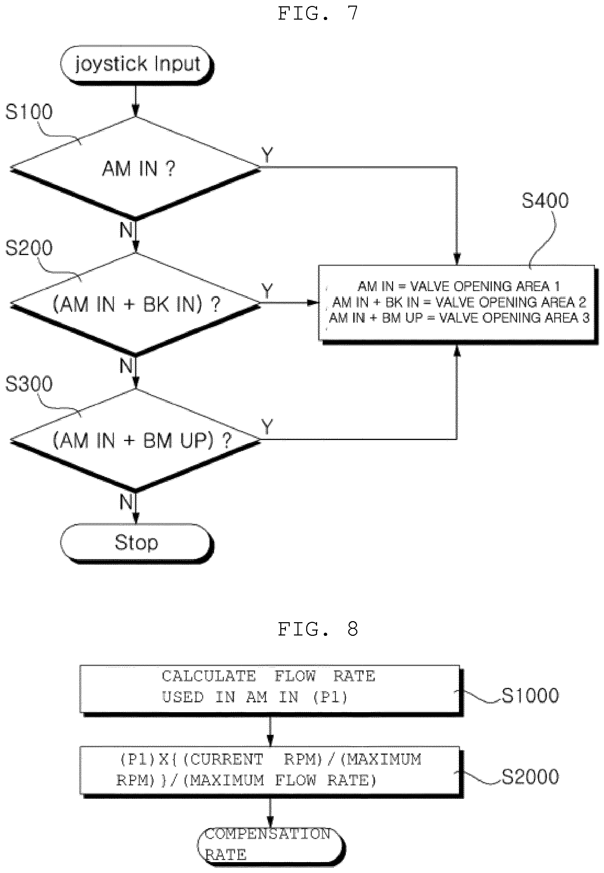

FIG. 3 is a hydraulic circuit diagram of a device for controlling a regeneration flow rate in a construction machine according to an exemplary embodiment, FIG. 4 is a hydraulic circuit diagram of a device for controlling a regeneration flow rate in a construction machine according to another exemplary embodiment, FIG. 6 is a flowchart of a control method of a device for controlling a regeneration flow rate in a construction machine according to an exemplary embodiment, FIG. 7 is a flowchart illustrating a process of selecting a preset opening area of an electronic proportional valve by manipulation of a control lever in the control method of the device for controlling a regeneration flow rate in a construction machine according to the exemplary embodiment, and FIG. 8 is a flowchart illustrating a process of compensating a flow rate of fluid based on a rotational speed of an engine during an arm-in operation in the control method of the device for controlling a regeneration flow rate in the construction machine according to the exemplary embodiment.

Referring to FIG. 3, the device for controlling a regeneration flow rate includes a variable capacity hydraulic pump (hereinafter referred to as a hydraulic pump) 11, a pilot pump 17, an arm cylinder 12, a variable arm regeneration valve 13, and an electronic proportional valve 18.

The arm cylinder 12 is actuated by working fluid supplied by the hydraulic pump 11.

The arm regeneration valve 13 is disposed on a passage between a smaller chamber of the arm cylinder 12 and a working fluid tank T. During an arm-in operation, the arm regeneration valve 13 allows a portion of working fluid discharged from the smaller chamber of the arm cylinder 12 to be supplied to a larger chamber of the arm cylinder 12 through a regeneration passage 16 or to be drained to the working fluid tank T therethrough.

The electronic proportional valve 18 is disposed on a passage between the pilot pump 17 and the arm regeneration valve 13. The electronic proportional valve 18 converts working fluid supplied by the pilot pump 17 to have pilot pressure proportional to an electrical signal applied thereto and applies the converted pilot pressure to the arm regeneration valve 13 to control an opening area of the arm regeneration valve 13.

The device for controlling a regeneration flow rate in the construction machine includes:
pressure sensors 20 measuring levels of pressure in the larger chamber and the smaller chamber of the arm cylinder 12; and
a controller (ECU) 19 calculating electrical signals corresponding to the levels of pressure measured by the pressure sensors 20 and applying the calculated electrical signals to the electronic proportional valve 18.

According to the configuration as described above, when an arm-in operation is performed by actuating the arm cylinder 12 to extend using working fluid supplied by the hydraulic pump 11 (i.e. when the center of mass of a bucket is positioned in a vertical line), a first portion of working fluid discharged from the smaller chamber of the arm cylinder 12 is regenerated by being supplied to the larger chamber of the arm cylinder 12 through the regeneration passage 16, while a second portion of the working fluid discharged from the arm cylinder 12 drains into the working fluid tank T through the arm regeneration valve 13.

Levels of pressure in the larger chamber and the smaller chamber of the arm cylinder 12 are measured using the pressure sensors 20, and measured pressure values are transmitted to the controller 19. Here, the pressure of working fluid within the smaller chamber of the arm cylinder 12 is higher than the pressure of working fluid within the larger chamber of the arm cylinder 12. As the spool of the electronic proportional valve 18 is converted to a most closed state in response to an electrical signal applied by the controller 19 to the electronic proportional valve 18, pilot pressure from the pilot pump 17 is not applied to the variable arm regeneration valve 13.

Thus, since the arm regeneration valve 13 remains closed during an arm-in operation, the regeneration flow rate of working fluid discharged from the smaller chamber of the arm cylinder 12 and supplied to the larger chamber of the arm cylinder 12 through the regeneration passage 16 can be increased.

Out of an arm-in operation period (i.e. when the center of mass of the bucket is outside of the vertical line), when the pressure of working fluid within the larger chamber of the arm cylinder 12 is higher than the pressure of working fluid within the smaller chamber of the arm cylinder 12, the spool of the electronic proportional valve 18 is converted to a most open state in response to an electrical signal applied by the controller 19.

Then, pilot pressure supplied by the pilot pump 17 is applied to the arm regeneration valve 13 through the electronic proportional valve 18 to convert the arm regeneration valve 13 into a most open state, such that working fluid discharged from the smaller chamber of the arm cylinder 12 can be rapidly drained to the working fluid tank T through the arm regeneration valve 13. This can consequently increase the operating speed of the arm cylinder 12.

As described above, during an arm-in operation, it is possible to improve operability and responsiveness by increasing the regeneration flow rate of working fluid discharged from the smaller chamber of the arm cylinder 12 and supplied to the larger chamber of the arm cylinder 12 or rapidly draining working fluid discharged from the smaller chamber of the arm cylinder 12 to the working fluid tank T.

Referring to FIG. 4, a device for controlling a regeneration flow rate in a construction machine according to another exemplary embodiment includes a variable capacity pump 11, a pilot pump 17, an arm cylinder 12, a variable arm regeneration valve 13, an electronic proportional valve 18, a control switch 21, and a controller 19.

(Hereinafter, the variable capacity pump 11 will also be referred to as the "hydraulic pump.")

The arm cylinder 12 is actuated by working fluid supplied by the hydraulic pump 11.

The arm regeneration valve 13 is disposed on a passage between a smaller chamber of the arm cylinder 12 and a working fluid tank T.

The electronic proportional valve 18 is disposed on a passage between the pilot pump 17 and the arm regeneration valve 13.

The control switch 21 may select a grading mode to perform flat grading work.

When a grading mode selection signal is input by the control switch 21, the controller 19 calculates an electrical signal to correspond to a level of pressure in the smaller chamber of the arm cylinder 12 and applies the calculated electrical signal to the electronic proportional valve 18, such that the pressure of the smaller chamber of the arm cylinder 12 can be increased to a preset value.

The control switch 21 may be installed on a monitor 22 or on a control lever (not shown) for the arm cylinder 12.

According to the above-described configuration, when the grading mode is selected by the control switch 21 installed on the motor 22, a grading mode selection signal is input to the controller 19. As working fluid discharged from the hydraulic pump 11 is supplied to the larger chamber of the arm cylinder 12 through the main control valve 14 to perform a grading operation, a first portion of working fluid discharged from the smaller chamber of the arm cylinder 12 is regenerated by being supplied to the larger chamber of the arm cylinder 12 through the regeneration passage 16, a second portion of the working fluid discharged from the smaller chamber of the arm cylinder 12 is drained to the working fluid tank T through the arm regeneration valve 13.

In response to an electrical signal applied by the controller 19 to the electrical proportional valve 18, working fluid supplied by the pilot pump 17 generates pilot pressure to correspond to the electrical signal, and the opening area of the arm regeneration valve 13 can be adjusted based on the pilot pressure. Thus, when the grading mode is selected, the pressure of working fluid discharged from the smaller chamber of the arm cylinder 12 is increased to a preset pressure. It is therefore possible to perform the grading operation with high levels of power and reliability.

When the grading mode is selected by manipulation of the control switch 21 as described above, the spool of the electronic proportional valve 18 is adjusted based on an electrical signal applied by the controller 19 to control the opening area of the arm regeneration valve 13. In this manner, the back pressure of the arm cylinder 12 can be adjusted to a higher level to suit the grading mode.

Referring to FIG. 6, provided is a control method of a device for controlling a regeneration flow rate in a construction machine according to an exemplary embodiment.

The device includes a variable capacity hydraulic pump (hereinafter also referred to as the hydraulic pump) 11, a pilot pump 17, an arm cylinder 12 actuated by working fluid supplied by the hydraulic pump 11, an arm regeneration valve 13 disposed on a passage between the smaller chamber of the arm cylinder 12 and a working fluid tank T, an electronic proportional valve 18 disposed on a passage between the pilot pump 17 and the arm regeneration valve 13, pressure sensors 20 measuring levels of pressure in the larger chamber and the smaller chamber of the arm cylinder 12, and a controller (ECU) 19 applying electrical signals corresponding to the levels of pressure measured by the pressure sensors 20 to the electronic proportional valve 18 to control the opening area of the arm regeneration valve 13. The control method includes:
Step S10 of calculating pressure values of the arm cylinder 12 from the levels of pressure measured by the pressure sensors 20;
Step S20 of linearizing the calculated pressure values of the arm cylinder through signal processing;
Step S30 of determining an operating mode of an actuator (including a boom, an arm, and a bucket) based on control signals input by an actuator control lever (RCV, i.e. control lever for controlling the actuator);
Step S40 of selecting a preset opening area value of the electronic proportional valve 18 to correspond to the selected operation mode of the actuator;
Step S50 of calculating a final opening area value by multiplying the selected opening area value of the electronic proportional valve 18 by a compensation value depending on a rotational speed of an engine; and
Step S60 of converting the calculated final opening area value of the electronic proportional valve 18 to a corresponding electrical signal and applying the converted electrical signal to the electronic proportional valve 18.

The opening area of the electronic proportional valve 18 is adjusted by the electrical signal applied by the controller 19, as illustrated in FIG. 7.

When an actuator control lever (an arm control lever) is manipulated to select an arm-in operation, the electronic proportional valve 18 is controlled to have a preset first opening area.

When actuator control levers (the arm control lever and a bucket control lever) is manipulated to select an arm-in and bucket-in operation, the electronic proportional valve 18 is controlled to have a preset second opening area.

When an actuator control lever (the arm control lever and a boom control lever) is manipulated to select an arm-in and boom-up operation, the electronic proportional valve 18 is controlled to have a preset third opening area.

According to the configuration as described above, in step S10, the pressure values of the arm cylinder 12 measured by the pressure sensors 20 are calculated. A load acting on the arm cylinder 12 and the operating state of the actuator can be determined based on the calculated pressure values.

In step S20, since the pressure values of the arm cylinder 12 measured by the pressure sensors 20 are floating, the calculated pressure values are linearized through proper signal processing.

In step S30, the operation mode of the actuator is determined based on a control signal input by the actuator control levers (RCV) (the boom, arm, and bucket control levers). That is, the operation mode of the actuator is determined to be one selected from among an arm-in operation, an arm-in and bucket-in combined operation, and an arm-in and boom-up combined operation.

In step S40, when the operation mode of the actuator is selected, the opening area of the electronic proportional valve 18 is selected from among preset values to correspond to the selected operation mode. Here, the opening area of the electronic proportional valve 18 is controlled to correspond to the operation mode of the actuator selected by manipulation of the actuator control levers.

In step S100 in FIG. 7, it is determined whether or not the control signal of the actuator control levers indicates an arm-in operation. When the control signal of the control levers indicates the arm-in operation, step S400 is performed. When the control signal does not indicate an arm-in operation, step S200 is performed.

In step S400, when the control signal of the actuator control levers indicates the arm-in operation, the electronic proportional valve 18 is controlled to have the preset first opening area corresponding to the arm-in operation.

In step S200, it is determined whether or not the control signals of the actuator control levers indicate an arm-in and bucket-in operation. When the control signals of the control levers indicate the arm-in and bucket-in operation, step S400 is performed. When the control signals of the control levers do not indicate an arm-in and bucket-in operation, step S300 is performed.

In step S400, when the control signals of the actuator control levers indicate the arm-in and bucket-in operation, the electronic proportional valve 18 is controlled to have the preset second opening area corresponding to the arm-in and bucket-in operation.

In step S300, it is determined whether or not the control signals of the actuator control levers indicate an arm-in and boom-up operation. When the control signals of the actuator control levers indicate the arm-in and boom-up operation, step S400 is performed. When the control signals of the actuator control levers do not indicate an arm-in and boom-up operation, the process is stopped.

In step S400, when the control signals of the actuator control levers indicate the arm-in and boom-up operation, the electronic proportional valve 18 is controlled to have the preset third opening area corresponding to the arm-in and boom-up operation.

In step S50, the final opening area value is calculated by multiplying the selected opening area value of the electronic proportional valve 18 by the compensation value depending on a rotational speed of the engine.

In step S60, the calculated final opening area value of the electronic proportional valve 18 is converted to a corresponding electrical signal, which is then applied to the electronic proportional valve 18.

As illustrated in FIG. 8, the opening area of the electronic proportional valve 18 can be actively controlled depending the rotational speed of the engine.

In step S1000, a first flow rate P1 used during an arm-in operation of the arm cylinder 12 is calculated.

In step S2000, a second flow rate is calculated by multiplying the calculated first flow rate P1 by the percentage of the current rotational speed of the engine with respect to the maximum rotational speed of the engine. The percentage of the calculated second flow rate with respect to the maximum flow rate is used as a compensation value: compensation value depending on the rotational speed of the engine = P1X{(current RPM)/(maximum RPM)}/(maximum flow rate)

When the control levers (RCV) are manipulated to select a combined operation of the arm, the bucket, and the boom as described above, the opening area of the electronic proportional valve 18 can be selected from preset values to correspond to the operation mode selected by the control levers, thereby improving operability and responsiveness in the combined operations. In addition, it is possible to actively control the opening area of the electronic proportional valve 18 to cope with combined operations of the actuator, drops in the revolutions per minute (RPMs) of the engine (RPM drops) due to an external force, and changes in the RPMs of the engine.

Although the exemplary embodiments of the present disclosure have been described for illustrative purposes, a person having ordinary skill in the art will appreciate that various modifications and alterations are possible, without departing from the scope and spirit of the present invention as disclosed in the accompanying claims.

### INDUSTRIAL APPLICABILITY

According to the present disclosure as set forth above, during an arm-in operation, a regeneration flow rate of working fluid discharged from the arm cylinder to a working fluid tank, i.e. a portion of the working fluid supplied to the larger chamber of the arm cylinder, is increased, thereby improving the operability and responsiveness of the actuator.

## Claims

1. A device for controlling a regeneration flow rate in a construction machine, comprising:
a variable capacity hydraulic pump;
a pilot pump;
an arm cylinder actuated by working fluid supplied by the hydraulic pump;
a variable arm regeneration valve disposed on a passage between the arm cylinder and a working fluid tank; and
an electronic proportional valve disposed on a passage between the pilot pump and the arm regeneration valve.

2. The device of claim 1, further comprising:
pressure sensors measuring levels of pressure in a larger chamber and a smaller chamber of the arm cylinder; and
a controller calculating electrical signals corresponding to the levels of pressure measured by the pressure sensors and applying the calculated electrical signals to the electronic proportional valve.

3. A device for controlling a regeneration flow rate in a construction machine, comprising:
a variable capacity hydraulic pump;
a pilot pump;
an arm cylinder actuated by working fluid supplied by the hydraulic pump;
a variable arm regeneration valve disposed on a passage between the arm cylinder and a working fluid tank;
an electronic proportional valve disposed on a passage between the pilot pump and the arm regeneration valve;
a control switch for selecting a grading mode; and
a controller, wherein, when a signal to select the grading mode is input by the control switch, the controller calculates an electrical signal corresponding to a level of pressure in a smaller chamber of the arm cylinder and applies the calculated electrical signal to the electronic proportional valve, such that the pressure of the smaller chamber of the arm cylinder increases to a set value.

4. The device of claim 3, further comprising a monitor provided with the control switch.

5. The device of claim 3, further comprising a control lever for the arm cylinder provided with the control switch.

6. A control method of a device for controlling a regeneration flow rate in a construction machine, wherein the device comprises a variable capacity hydraulic pump, a pilot pump, an arm cylinder actuated by working fluid supplied by the hydraulic pump, a variable arm regeneration valve disposed on a passage between the arm cylinder and a working fluid tank, an electronic proportional valve disposed on a passage between the pilot pump and the arm regeneration valve, pressure sensors measuring levels of pressure in a larger chamber and a smaller chamber of the arm cylinder, and a controller applying electrical signals corresponding to the levels of pressure measured by the pressure sensors to the electronic proportional valve to control an opening area of the arm regeneration valve, the control method comprising:
calculating pressure values from the levels of pressure measured by the pressure sensors;
linearizing the calculated pressure values through signal processing;
determining an operation mode of an actuator based on a control signal input by a control lever for the actuator;
selecting a preset opening area value of the electronic proportional valve corresponding to the determined operation mode of the actuator;
calculating a final opening area value by multiplying the selected opening area value of the electronic proportional valve by a compensation value depending on a rotational speed of an engine; and
converting the calculated final opening area value of the electronic proportional valve to a corresponding electrical signal and applying the converted electrical signal to the electronic proportional valve.

7. The control method of claim 6, wherein
the electronic proportional valve of which an opening area is adjusted by the electrical signal applied by the controller is controlled:
to have a preset first opening area, when the control lever for the actuator is manipulated such that the actuator is in an arm-in operation mode,
to have a preset second opening area, when the control lever for the actuator is manipulated such that the actuator is in an arm-in and bucket-in operation mode, and
to have a preset third opening area, when the control lever for the actuator is manipulated such that the actuator is in an arm-in and boom-up operation mode.

8. The control method of claim 6, wherein the compensation value is obtained by:
calculating a first flow rate used during the arm-in operation mode of the arm cylinder;
calculating a second flow rate by multiplying the calculated first flow rate by a percentage of a current rotational speed of the engine with respect to a maximum rotational speed of the engine; and
determining a percentage of the second flow rate with respect to a maximum flow rate as the compensation value.
